# EUROPEAN PATENT SPECIFICATION

(11) **EP 0 938 038 B1**
(45) Date of publication and mention of the grant of the patent: **17.09.2003**
(21) Application number: 99109584.5
(22) Date of filing: 07.10.1992
(51) Int. Cl.: G06F 3/033

(54) **An apparatus for manipulating an object displayed on a display device**
Gerät zur Manipulation eines auf einem Bildschirm angezeigten Objektes
Appareil pour la manipulation d'un objet affiché sur une unité d'affichage

(30) Priority: 07.10.1991 JP 25823291
(43) Date of publication of application: 25.08.1999
(62) Divisional of application: 92117111.2
(73) Proprietor: FUJITSU LIMITED, Kawasaki-shi, Kanagawa 211-8588 (JP)
(72) Inventor: Minakuchi, Yu, c/o Fujitsu Limited, Kawasaki 211-8588 (JP); Okuyama, Satoshi, c/o Fujitsu Limited, Kawasaki 211-8588 (JP); Kamata, Hajime, c/o Fujitsu Limited, Kawasaki 211-8588 (JP); Fukue, Akiko, Tokyo 167 (JP)
(74) Representative: Stebbing, Timothy Charles

(56) References cited:
- EP-A- 0 279 652
- EP-A- 0 314 395
- EP-A- 0 448 496

## Description

The present invention relates to an apparatus for manipulating an object displayed on a display device.

As use of computer systems for data processing has become widespread in recent years, more and more users are being required to input data to and converse with data processors such as work stations and personal computers. A vast range of application programs are available for recent data processors and even a complicated application can be processed by using such application programs in combination. However, there is a problem that such data processors are very difficult to handle, especially to manipulate an object displayed on a display device, for those who have little knowledge of computers.

Therefore, an apparatus for manipulating an object displayed on a display device, which is easy to use even for a person who has no special knowledge of computers, is in great demand.

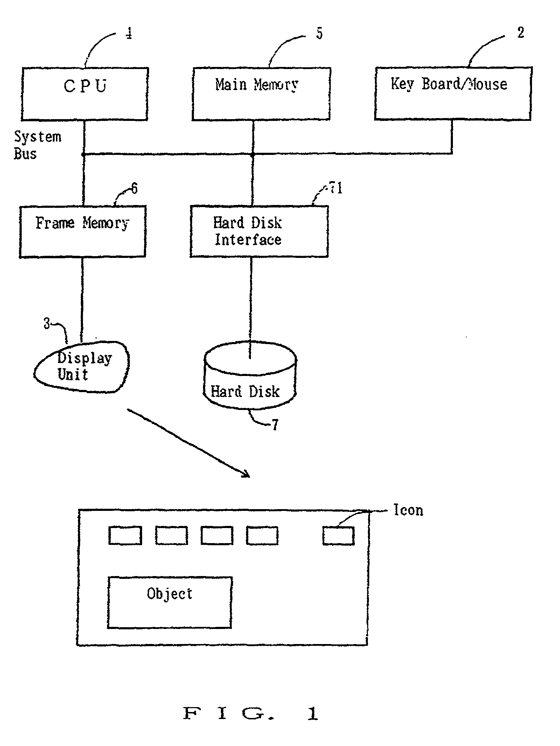

Fig. 1 illustrates a computer system with a conventional user interface.

A computer system with a conventional user interface consists mainly of a central processing unit (CPU) 4, a main memory 5, a keyboard/mouse 2, a frame memory 60 and a hard disk interface 71, which are interconnected via a system bus interface, and also a hard disk 7 and a display unit 3, which are connected to system bus interface via the hard disk interface and the frame memory 6, respectively. The main memory 5 stores a system control program and application programs which handle graphics processing, and provides a work area for use by the programs. The CPU 4 performs display operations under control of the programs. The hard disk 7 stores a data file for graphics to be displayed on the display unit 3. The frame memory 6 stores a frame of picture (or object) data to be displayed on the display unit 3.

To manipulate an object displayed on a display unit 3 in the above system, an operator is required to input a command for manipulating the object by using a keyboard/mouse 2 or to select an icon (a symbolic representation of a computer function) displayed on a display unit 3 by using the keyboard/mouse 2 in order to command a desired function. However, it is troublesome and annoying to use a keyboard/mouse and icons and a person with less knowledge of computers tends to be allergic to even touching a keyboard/mouse.

Therefore, it is a great problem that such data processors are very difficult to handle for those who have less knowledge of computers.

It is therefore desirable to provide an apparatus which can easily manipulate an object displayed on a display unit.

It is also desirable to provide a user interface with which a user can easily manipulate an object displayed on a display unit.

IBM Technical Disclosure Bulletin, vol. 33, No. 1B, June 1990, pages 277-278 discloses an apparatus in which icons resembling three-dimensional push buttons are displayed on the panel (screen). These icons can be "manipulated" by pushing them in or out, the icon display changing in appearance to reflect the amount of depression of the push button. There is only one type of object (icon) and they are displayed at fixed positions on the screen.

EP-A-0 279 652 discloses an apparatus or a controller according to the preamble of each independent claim. This apparatus employs a screen of the type in which a plurality of light beams are directed across the face of the screen and occluded by one or more occluding objects, such a fingers. By detecting occlusion of the beams, the positions of the occluding objects can be determined. By moving the occluding objects such as fingers, graphic objects displayed on the screen can be manipulated. One disclosed manipulation is to move a graphic object by pointing to it. Another is to define size and position of an area on the display by using two fingers. Another is to rotate a knob in a virtual control panel by rotating two fingers.

According to the present invention, there is provided an apparatus for use with a display device to manipulate an object displayed on the display device, the apparatus comprising: object manipulation means for manipulating and displaying the object on the display device; a touch panel, mounted to the display device and representing a display surface of the display device, which is sensitive to characteristics of a touching contact on the touch panel, the characteristics including at least co-ordinate positions of the touching contact, for outputting corresponding touch panel information representing the characteristics of the touching contact on the touch panel; wherein said object manipulation means comprises: object storage means for storing at least one data file which stores object data for displaying the object; display information storage means for storing display position information which specifies the position where the object is displayed on the display device; and display control means for recognizing the type of manipulation of the object in accordance with the touch panel information indicating a movement such that two touching contacts touch opposite sides of the object, move whilst they remain touching the opposite sides of the object and stop with a distance in between, and for controlling to display the object on the display device so that the object moves on the display device from where the two touching contacts touch the opposite sides of the object to where the two touching contacts stop with a distance in between.

According to another aspect of the invention, there is provided a controller for controlling the above-identified apparatus and comprising object manipulation means for manipulating and displaying the object on the display device, outputting means for outputting touch panel information representing a position of a touching contact; wherein said object manipulation means comprises: object storage means for storing at least one data file which stores object data for displaying the object; display information storage means for storing display position information which specifies the position where the object is displayed on the display device; and display control means for recognizing the type of manipulation of the object in accordance with the touch panel information indicating a movement such that two touching contacts touch opposite sides of the object, move whilst they remain touching the opposite sides of the object and stop with a distance in between, and for controlling to display the object on the display device so that the object moves on the display device from where the two touching contacts touch the opposite sides of the object to where the two touching contacts stop with a distance in between.

The invention further provides an apparatus according to claim 4.

Thus, the present invention can provide a touch-sensitive panel (e.g. touch screen), means storing a plurality of data files, display information storage means and display control means, which can be used with a display device of a computer system or workstation.

Reference is made, by way of example, to the accompanying drawings, in which Figures 5 and 6 particularly concern the present invention, and Figures 7 to 11 relate to other types of manipulation illustrated by way of background explanation.
Fig. 1 illustrates a computer system with a conventional user interface;

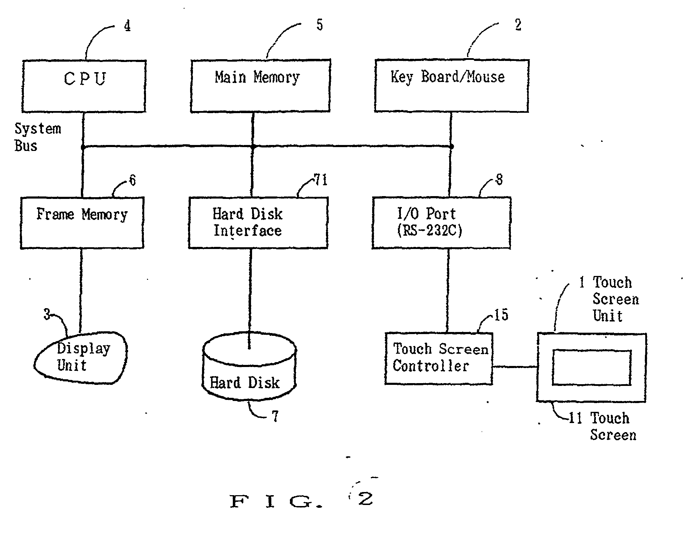

Fig. 2 is a configuration diagram of a touch-screen-equipped workstation, to which the present invention may be applied;

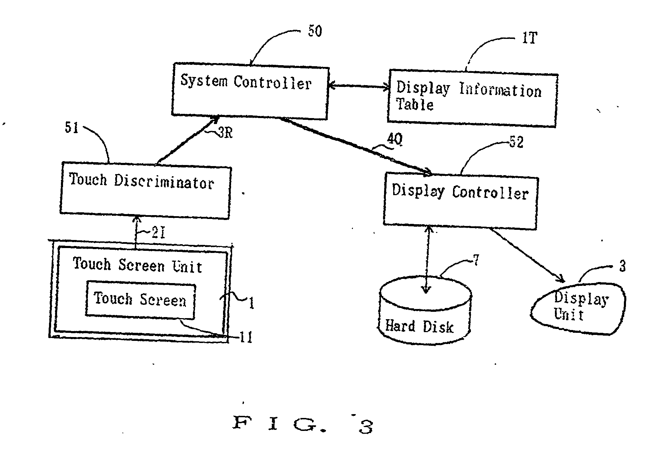

Fig. 3 is a schematic diagram illustrating the principle of the present invention;

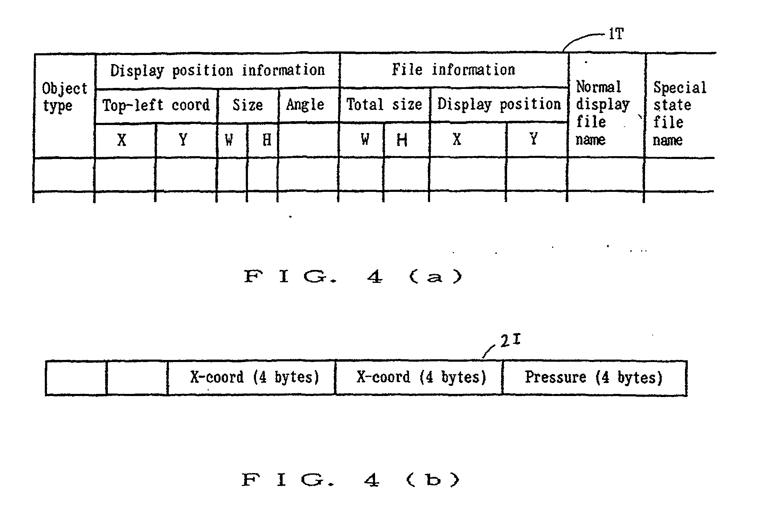

Fig. 4(a) shows a display information table;
Fig. 4(b) shows touch screen information;

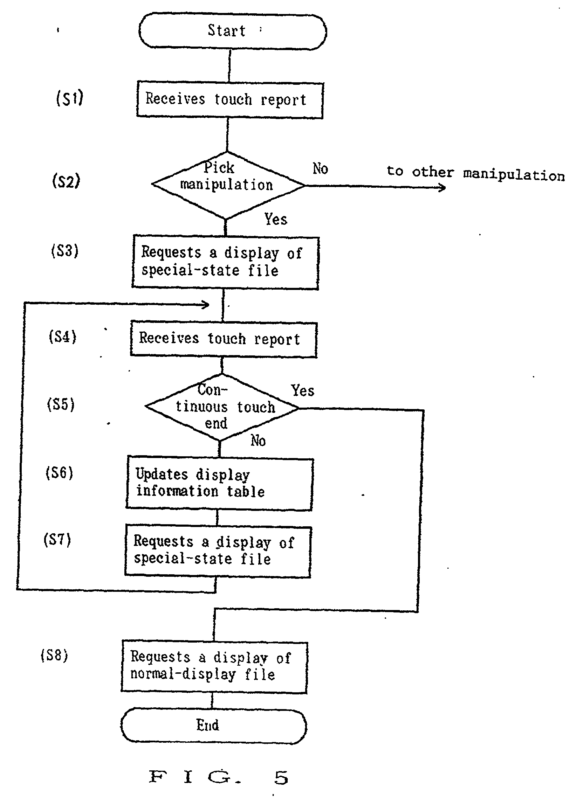

Fig. 5 is a flowchart illustrating a pick manipulation;

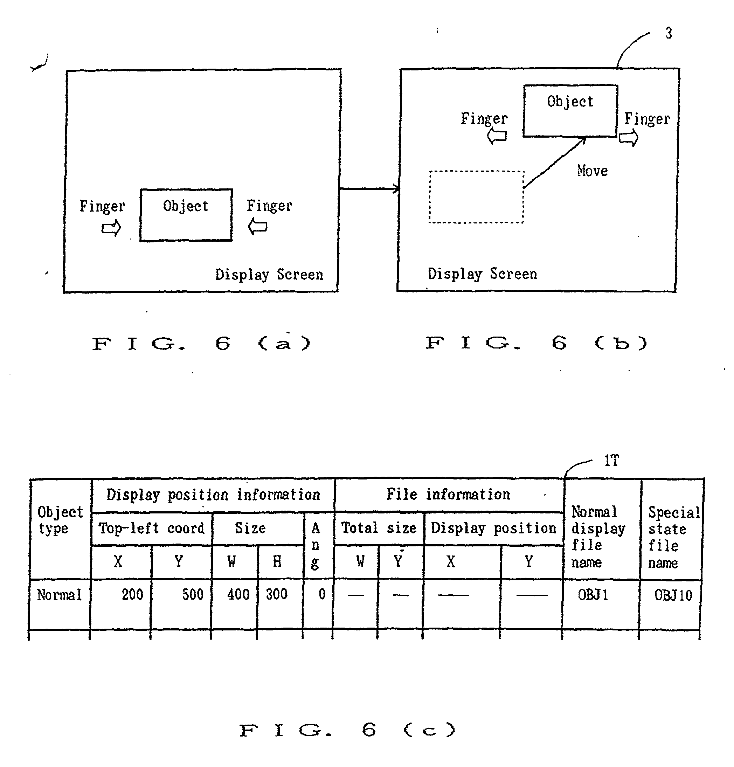

Fig. 6 is a diagram illustrating a pick manipulation;

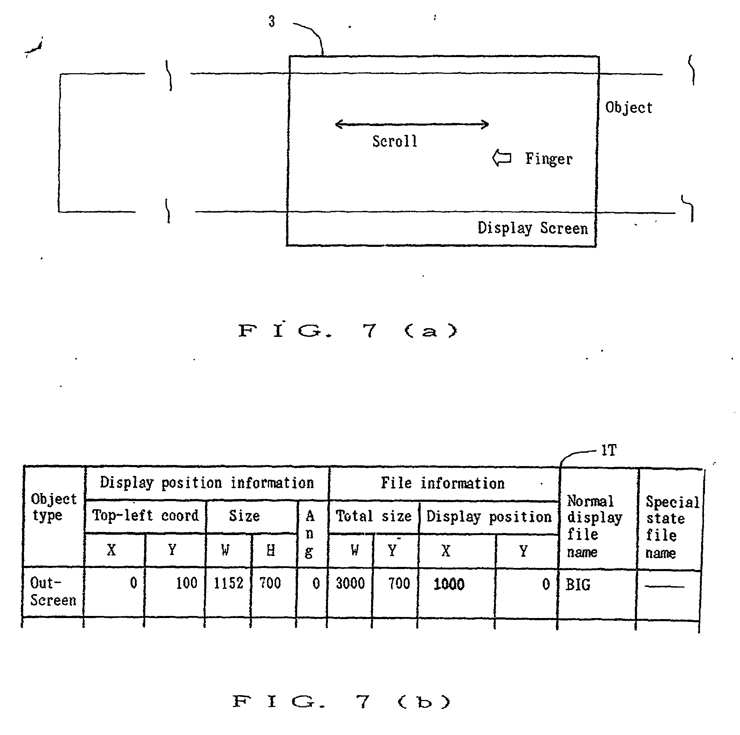

Fig. 7 is a diagram illustrating a scroll manipulation;

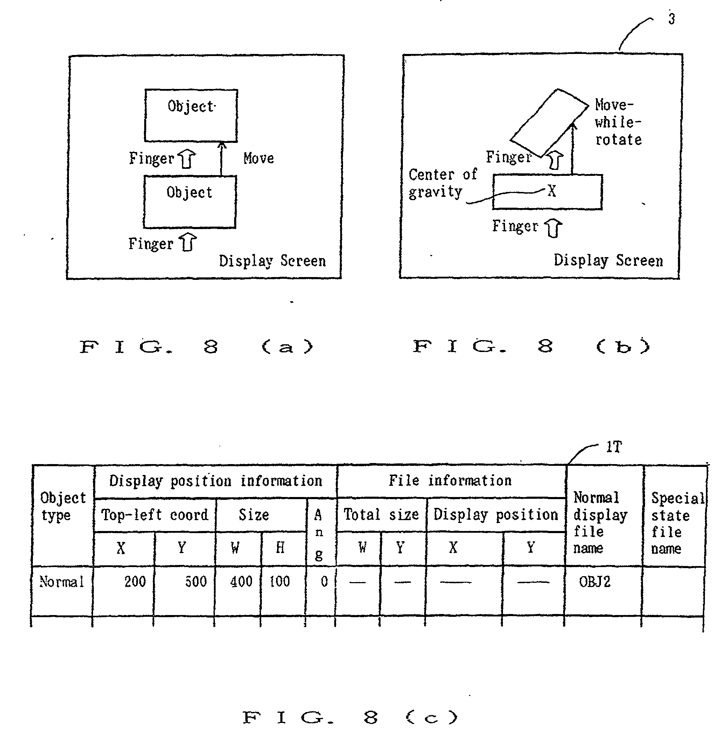

Fig. 8 is a diagram illustrating a push manipulation;

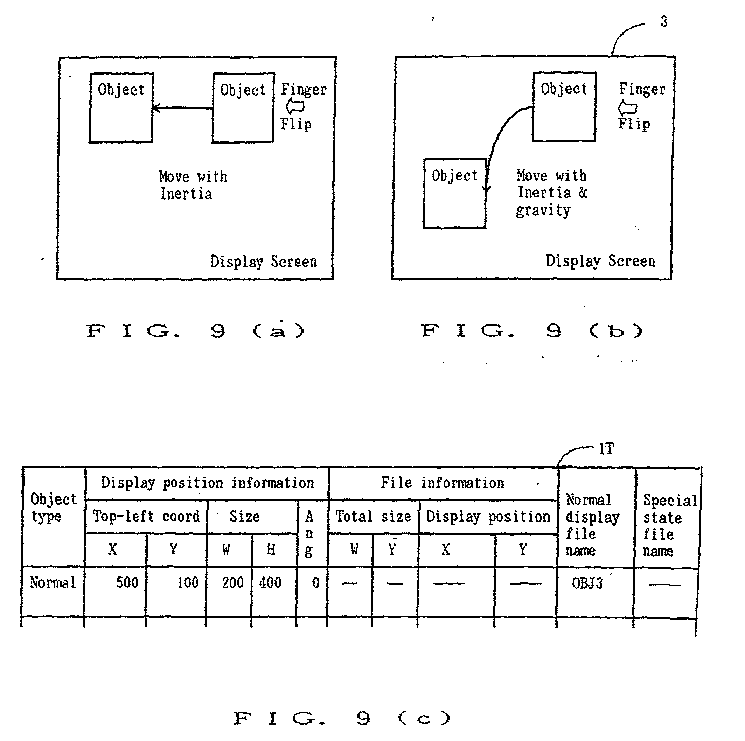

Fig. 9 is a diagram illustrating a flip manipulation;

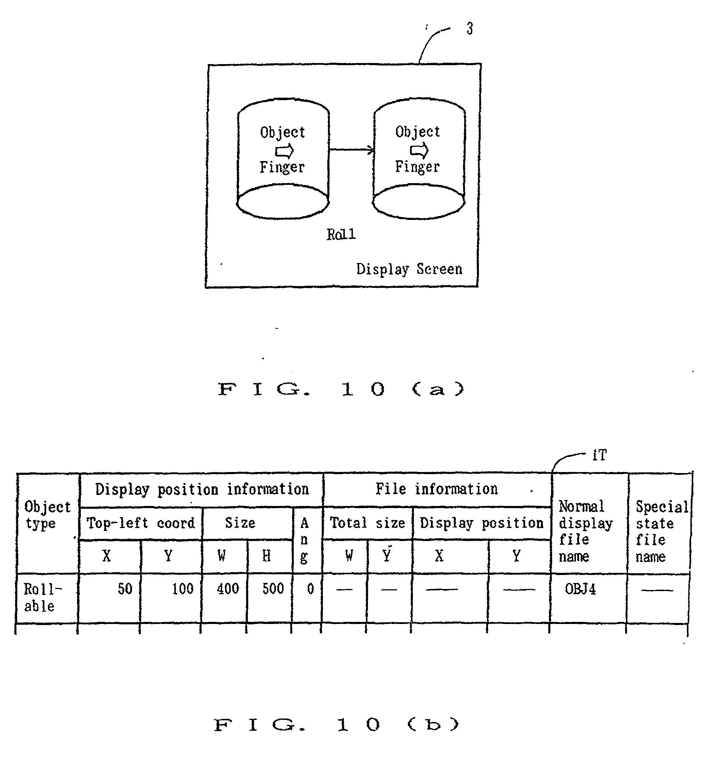

Fig. 10 is a diagram illustrating a roll manipulation;

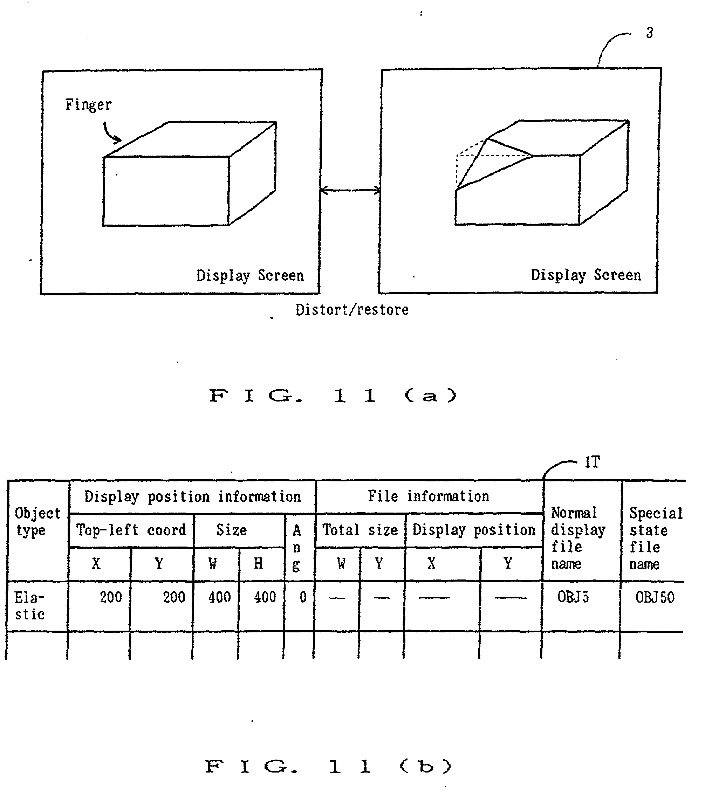

Fig. 11 is a diagram illustrating a distort-restore manipulation.

Throughout the above-mentioned drawings, identical reference numerals are used to designate the same or similar component parts.

Fig. 2 is a configuration diagram of a touch screen-equipped workstation for implementing the present invention.

In addition to the conventional system shown in Fig. 1, the system includes an input-output (abbreviated to I/O) port 8, a touch screen controller 15 and a touch screen unit 1 with a touch screen 11. The touch screen controller 15, connected to the input-output port 8 through an RS-232C interface, controls the touch screen unit 1. The touch screen unit 1, which is sensitive to a position or positions (X-Y co-ordinates) where it is touched, and preferably also to a pressure applied to it, acts as a user interface that allows a user to send signals to the CPU by touching an area thereon with a body, such as a finger or a pencil.

Fig. 3 is a schematic diagram illustrating the principle of the present invention.

For easy understanding of the principle, the input-output port 8, touch screen controller 15 and touch screen unit 1 shown in Fig. 2 are represented by the touch screen unit 1; and the frame memory 6 and display unit 3 are represented by the display unit 3. A system controller 50, touch discriminator 51 display controller 52 and display information table IT, which are stored in the main memory 5, control display operations featured by the present invention.

Fig. 4(a) shows a display information table. Fig. 4(b) shows touch screen information.

A display information table IT, which is provided in the main memory 5, corresponding to objects, includes an object type, display position information, file information, normal-display file name and special-state file name. The object type defines the type including the shape, properties, circumstances, etc., of the object. The display position information defines the size of the object (width, height), and the position (top-left coordinates X,Y) and the angle at which the object is displayed on the display unit 1.

The file information stored in the display data file, which is used for an object which is so large in size that it requires scrolling to view the whole object, defines the size (width W, height H) of the whole object relative to the display screen size, and also the position (top-left co-ordinates X, Y) of the object portion being displayed on the display device, relative to the whole object data. The normal display file name specifies a normal display file where object data for displaying a normal-state of the object is stored. The special-state file name specifies a special-state file where object data for displaying a special-state (e.g. turn-over indication of display color, used for displaying intermediate process of manipulating the object) of the object is stored.

Touch-screen information 2I, which is sent from the touch screen unit 1, includes a touch position (X-Y coordinates) where the touch screen 11 is touched and a pressure applied thereon.

The following manipulations are possible, in which the Pick Manipulation (2) is particularly relevant to the present invention.
(1) The touch discriminator 51, based on the touch screen information 2I from the touch screen unit 1, discriminates the type of a touch an operator's finger has on the touch screen 11, that is, a touch type including, i.e., a "continuous touch start" and "continuous touch end" explained later. The touch discriminator 51 sends to the system controller 50, the result of the discrimination as a touch report 3R, which includes a touch type and touch coordinates.
   Based on the touch report 3R from the touch discriminator 51 and the display information table 1T, the system controller 50 determines the type of a manipulation conducted by an operator and, according to the determination, updates the display information table 1T. Then, the system controller 50 sends to the display controller 52, a display update request 4Q along with "display update data" which includes contents of the display information table 1T updated (including display position information, file information, normal display file name and special-state file name).
   On receipt of the display update request 4Q from the system controller 50, the display controller 52 reads display file data (including object data) specified by the file name from the hard disk 7 and stores the data into the main memory 5. The display controller 52 then updates the object data in accordance with the display update data from the system controller 50 and loads the thus-updated object data into the frame memory 6 to display the object, as manipulated by the operator on the touch screen unit 1.
   Thus, the present invention determines a manipulation to be conducted on the object displayed, based on the touch screen information 2I which results from an operator's touching the touch screen 11 and the display information table IT which defines the object's shape, physical properties, display position, etc. It then displays the object according to the manipulation determined, as intended by the operator.
(2) Pick manipulation (see Figs. 5 and 6.)
   A pick manipulation is conducted in such a way as an object is picked up at a position on the display surface of the display unit 3 and placed at another position.
   Fig. 5 is a flowchart illustrating a pick manipulation. Fig. 6 is a diagram illustrating a pick manipulation.
   A pick manipulation is carried out according to the following steps (S1-S8) in Fig. 5:
   (S1) The system controller 50 receives a touch report 3R from the touch discriminator 51.
   (S2) The system controller 50 checks the touch report 3R to see whether the object-finger relation is a pick manipulation as shown in Fig. 6(a), based on the touch report 3R and contents of the display information table IT shown in Fig. 6(c). When the relation is not a pick manipulation, the system controller 50 checks the touch report 3R for other manipulation.
   (S3) When the relation is a pick manipulation, the system controller 50 sends a display update request 4Q including ''display update data", commanding that the special-state file (turn-over indication) be displayed at the position specified by the display information table 1T.
   (S4) The system controller 50 receives a touch report 3R.
   (S5) The system controller 50 determines whether the touch report 3R includes a "continuous touch end", which occurs when the finger-object relation is as in Fig. 6(b). When a "continuous touch end" is reported, the operation goes to step (S8).
   (S6) Otherwise, the system controller 50 updates the display position information "coordinates (X, Y)" of the display information table IT so that the object is positioned between the two fingers.
   (S7) The system controller 50 sends display update request 4Q to the display controller 52, commanding that the special-state file be displayed according to the display information table IT updated, and returns to step (S4).
   (S8) When "continuous touch end" is reported by a touch report 3R, the system controller 50 sends a display update request 4Q to the display controller 52, commanding that the normal-display file be displayed at the position specified in the display information table 1T.

   Following manipulations are carried out in the same way as described in the above flowchart of the pick manipulation.
(3) Scroll manipulation (see Fig. 7.)
   A scroll manipulation is conducted in such a way as an object extending outside of the display surface of the display unit 3 is moved into and out of the display surface.
   Fig. 7 is a diagram illustrating a scroll manipulation.
   On determining that the finger moves while touching the touch screen 11 based on the touch screen information 2I from the touch screen unit 1, the discriminator 51 sends to the system controller 50, a touch report 3R including "continuous touch start" for the touch type and also "coordinates (800, 800)" for the touch position. As another touch screen information 2I comes in, the discriminator 51 sends a touch report 3R including "continuous touch in progress" and coordinates (780, 800). When the touch screen information 2I is not sent for more than 100 milliseconds, for example, the discriminator 51 sends a touch report 3R including "continuous touch end" and coordinates (700, 800) to the system controller 50.
   when a "continuous touch start" is reported and the "object type" is defined as "out-screen" in the display information table IT, the system controller 50 recognizes the object as a large one extending beyond the display screen. Then, the system controller 50 determines the speed at which the finger has moved from right to left, for example, based on a change in the X-coordinate in the touch report 3R.
   Depending on whether the finger has moved at a speed of more (high-speed) or less (normal-speed) than for example 20 dots (pixels) e.g. since the last check, the display screen is scrolled first at an interval of 100 or 500 milliseconds, respectively. Then, the interval, at which the display update request 4Q is sent to the display controller 52, is increased by a factor 1.5 at each touch report 3R and, when the interval reaches 2 seconds, the scrolling is stopped.
   Practically, the screen is so controlled that it starts scrolling at an above-mentioned speed after a finger has moved a distance of 4 dots or more. That is, on recognizing that the finger has moved for that distance, the system controller 50 updates the file information "display position X" of the display information table IT so that the object is displayed to the left by 10 dots, for example. Then, it sends to the display controller 52, a display update request including display position information, file information and normal display file name from the display information table IT updated.
   The display controller 52 reads from the hard disk a display file specified by the normal display file name and loads it in the main memory 5. The display controller 52 then transfers only the part of the display file specified by the file information "display position X" of the display information table IT, from the main memory 5 to the appropriate location of the frame memory 6.
   In the same way, the system controller 50 sends a display update request 4Q to the display controller 52 every time it receives a touch report 3R.
   When another "continuous touch" is reported before the scroll currently in progress comes to a stop, a new scroll can start from this point and at the first speed described above.
(4) Scroll-stop manipulation (see Fig. 7.)
   Fig. 7 is a diagram illustrating a scroll manipulation.
   When a touch position given by a touch report 3R is the same as or approximately 5 dots apart from the position of the scrolling currently in progress, the system controller 50 doubles the frequency with which display update requests 4Q are sent to the display controller 52, in order to put an end to the scrolling.
(5) Push manipulation (see Fig. 8.)
   A push manipulation is conducted in such a way as an object is pushed on the display surface of the display unit 3.
   Fig. 8 is a diagram illustrating a push manipulation.
   The system controller 50 determines the type of a manipulation, based on the touch report 3R and contents of the display information table IT shown in Fig. 8(c). When the manipulation is a push manipulation as shown in Fig. 8(a), the system controller 50 sends to the display controller 52, a display update request 4Q including display position information, file information and normal display file name so that the object is displayed close to the finger position reported by the touch report 3R. The above display operation is repeated until a "continuous touch end" Is reported by a touch report 3R.
(6) Push-while-rotate manipulation (see Fig. 8.)
   A push-while-rotate manipulation is conducted in such a way as an object is pushed at a position off its center (or the center of gravity) and it moves rotating on the display surface of the display unit 3.
   Fig. 8 is a diagram illustrating a push manipulation.
   The system controller 50 determines the type of a manipulation, based on the touch report 3R and contents of the display information table IT shown in Fig. 8(c). When the manipulation is a push-while-rotate manipulation as shown in Fig. 8(b), the system controller 50 sends to the display controller 52, display update requests 4Q with the angle of rotation increasing by 2 degrees, i.e., while increasing the angle in the display information table IT shown in Fig. 8(c).
   The display controller 52 reads the display file from the hard disk and loads the data in the main memory 5, rotates the object by the angle and with the left-top coordinates (X, Y) as a rotational center, as specified by the display update request 4Q, and transfers the data with the object rotated, from the main memory 5 to the frame memory 6.
(7) Flip manipulation (see Fig. 9.)
   A flip manipulation is conducted in such a way as a finger flips an object or touches the object from a remote position at a high speed on the display surface of the display unit 3.
   Fig. 9 is a diagram illustrating a flip manipulation.
   When a touch report 3R is input from the touch discriminator 51, the system controller 50 descriminates the type of a manipulation based on the touch report 3R and contents of the display information table IT shown in Fig. 9 (c). When the manipulation is a flip manipulation as shown in Fig. 9 (a), the system controller 50 obtains a finger speed based on the touch report 3R and also an object speed (i.e., the interval at which display update requests 4Q are sent to the display controller 52), in the same way as described in item (3). The system controller 50 sends display update requests 4Q to the display controller 52, while updating the display position information left-top coordinates (X, Y) of the display information table 1T so that the object moves in the direction the finger moves. The system controller 50 stops moving the object when the above-mentioned interval reaches 2 seconds.
(8) Flip-under-gravity manipulation (see Fig. 9.)
   A flip-under-gravity manipulation is conducted in such a way as an object which is subjected to a gravity is flipped by a finger on the display surface of the display unit 3.
   Fig. 9 is a diagram illustrating a flip manipulation.
   When the finger manipulation is a flip as in the above item (8) and the display information table IT defines the object type as "gravity" meaning that the object is subjected to gravity, for example, the object moves under the combined influences of inertia and simulated gravity, i.e. "falls" as shown in Fig. 9(b). Therefore, the system controller 50 sends display update requests 4Q to the display controller 52, while updating the display position information left-top coordinates (X, Y) by adding a value to the Y-coordinate of of the display information table 1T. The value is represented by 2 to the Nth power (N: the number of display update requests 4Q sent). In this case, too, the system controller 50 stops moving the object when the above-mentioned interval reaches 2 seconds. The resulting trajectory may be a parabola.
(9) Roll manipulation (see Fig. 10.)
   A roll manipulation is conducted in such a way as a rollable object is rolled by a finger on the display surface of the display unit 3.
   Fig. 10 is a diagram illustrating a roll manipulation.
   When a touch report 3R is input from the touch discriminator 51 and the display information table IT defines the object type as "rollable" meaning that the object is constructed such that it rolls when flipped like a globe or a cylinder, as shown in Fig. 10(a), the system controller 50 sends display update requests 4Q to the display controller 52, while updating the display position information left-top coordinates (X, Y) of the display information table IT so that the object moves a distance 10 per. cent behind the distance and in the direction the finger moves.
(10) Distort-restore manipulation (see Fig. 11.)

A distort-restore manipulation Is conducted in such a way as an"elastic"object is pressed by a finger on the display surface of the display unit 3, thereby deforming the displayed object.

Fig. 11 is a diagram illustrating a distort-restore manipulation.

When a touch report 3R is input from the touch discriminator 51 and the display information table IT defines the object type as "elastic" meaning that the object can be distorted and restored according to a pressure applied thereon by a finger, as shown in Fig. 11(a), the system controller 50 calculates an amount of distortion of the object based on the pressure reported by the touch report 3R. It stores in the display information table 1T, a special-state file name specifying one of special-state files (for displaying a distorted state of the object in turn-over indication) corresponding to the amount of distortion calculated. Then, the system controller 50 sends a display update request 4Q to the display controller 52, commanding that the special-state file be displayed at the current display position. When the-above operation is repeated as necessary and a "continuous touch end" is reported by a touch report 3R, the system controller 50 sends a display update request 4Q (with a normal display file name specified) to the display controller 52, commanding that a normal display file (normal indication) be displayed at the current display position. A plurality of special-state files are provided in the hard disk 7, corresponding to the amount of distortion of the object, which results from a pressure applied on the touch screen 11.

As is apparent by the above description, the present invention regards a display screen as a virtual space. It defines conditions and physical properties of an object (e.g., weight, hardness, frictional resistance, center of gravity) in the display information table 1T. It also receives touch screen information 2I indicating a finger-touched position and pressure is input from a touch screen unit 1. Based on the touch screen information 2I and the display information table IT, the present invention determines a manipulation to be conducted on the object displayed, e.g. scrolling, picking (up), pushing, rolling, distorting the object on the display surface of the display unit 3. Thus, the present invention allows a user to manipulate an object displayed on a display device quite easily, even when the user has little knowledge of computers.

## Claims

1. An apparatus for use with a display device (3) to manipulate an object displayed on the display device, the apparatus comprising:
object manipulation means (7,50,51,52,1T) for manipulating and displaying the object on the display device (3);
a touch panel (11), mounted to the display device (3) and representing a display surface of the display device, which is sensitive to characteristics of a touching contact on the touch panel, the characteristics including at least co-ordinate positions of the touching contact, for outputting corresponding touch panel information representing the characteristics of the touching contact on the touch panel (11);
wherein said object manipulation means comprises:
object storage means (7) for storing at least one data file which stores object data for displaying the object;
display information storage means (1T) for storing display position information which specifies the position where the object is displayed on the display device (3); and
display control means (52) for recognizing the type of manipulation of the object in accordance with the touch panel information indicating a movement such that two touching contacts touch opposite sides of the object, move whilst they remain touching the opposite sides of the object and stop with a distance in between, and for controlling to display the object on the display device (3) so that the object moves on the display device from where the two touching contacts touch the opposite sides of the object to where the two touching contacts stop with a distance in between.

2. A controller for controlling an apparatus according to claim 1, the controller comprising object manipulation means (7, 50, 52, 1T) for manipulating and displaying the object on the display device (3),
outputting means (51) for outputting touch panel information (3R) representing a position of a touching contact;
wherein said object manipulation means comprises:
object storage means (7) for storing at least one data file which stores object data for displaying the object;
display information storage means (1T) for storing display position information which specifies the position where the object is displayed on the display device (3); and
display control means (52) for recognizing the type of manipulation of the object in accordance with the touch panel information indicating a movement such that two touching contacts touch opposite sides of the object, move whilst they remain touching the opposite sides of the object and stop with a distance in between; and for controlling to display the object on the display device (3) so that the object moves on the display device from where the two touching contacts touch the opposite sides of the object to where the two touching contacts stop with a distance in between.

3. The apparatus of claim 1 or the controller of claim 2, wherein
said display control means (52) is operable to recognize the movement as a pick manipulation and to perform control so as to display the object on the display device (3) so that the object moves on the display device from where the two touching contacts touch the opposite sides of the object to where the two touching contacts stop with a distance in between.

4. An apparatus for use with a display device (3) to manipulate an object displayed on the display device, the apparatus comprising object manipulation means (7, 50, 51, 52, 1T) for manipulating and displaying the object of the display device (3);
a touch panel (11), mounted to the display device (3) and representing a display surface of the display device, which is sensitive to characteristics of a touching contact on the touch panel, the characteristics including at least co-ordinate positions of the touching contact, for outputting corresponding touch panel information representing the characteristics of the touching contact on the touch panel (11);
wherein said object manipulation means comprises:
object storage means (7) for storing at least one data file which stores object data for displaying the object;
display information storage means (1T) for storing display position information which specifies the position where the object is displayed on the display device (3); and
display control means (52) for recognizing the type of manipulation of the object in accordance with the touch panel information, and performing a pick manipulation of the object in response to touch panel information indicating that two touching contacts have approached and touched opposite sides of the object, whereby the object is moved along with movement of the two touching contacts whilst they remain touching the opposite sides of the object, and the object is released when the two touching contacts are no longer touching the opposite sides of the object and have moved apart.

## Patentansprüche

1. Vorrichtung zur Verwendung mit einer Anzeigeeinrichtung (3), um ein Objekt zu manipulieren, das an der Anzeigeeinrichtung angezeigt wird, welche Vorrichtung umfaßt:
ein Objektmanipulationsmittel (7, 50, 51, 52, 1T) zum Manipulieren und Anzeigen des Objektes an der Anzeigeeinrichtung (3);
ein Berührungsfeld (11) , das an die Anzeigeeinrichtung (3) montiert ist und eine Anzeigeoberfläche der Anzeigeeinrichtung darstellt, die gegenüber Charakteristiken eines Berührungskontaktes auf dem Berührungsfeld empfindlich ist, welche Charakteristiken wenigstens Koordinatenpositionen des Berührungskontaktes enthalten, zum Ausgeben von entsprechenden Berührungsfeldinformationen, welche die Charakteristiken des Berührungskontaktes auf dem Berührungsfeld (11) darstellen;
bei der das Objektmanipulationsmittel umfaßt:
ein Objektspeichermittel (7) zum Speichern wenigstens einer Datendatei, die Objektdaten zum Anzeigen des Objektes speichert;
ein Anzeigeinformationsspeichermittel (1T) zum Speichern von Anzeigepositionsinformationen, welche die Position spezifizieren, wo das Objekt an der Anzeigeeinrichtung (3) angezeigt wird; und
ein Anzeigesteuermittel (52) zum Erkennen des Manipulationstyps des Objektes gemäß den Berührungsfeldinformationen, die solch eine Bewegung angeben, daß zwei Berührungskontakte gegenüberliegende Seiten des Objektes berühren, bewegen, während sie die gegenüberliegenden Seiten des Objektes weiterhin berühren, und stoppen, wobei eine Distanz dazwischen liegt, und zum Steuern, um das Objekt an der Anzeigeeinrichtung (3) so anzuzeigen, daß sich das Objekt an der Anzeigeeinrichtung von da aus, wo die zwei Berührungskontakte die gegenüberliegenden Seiten des Objektes berühren, nach da bewegt, wo die zwei Berunrungskontakte stoppen, wobei eine Distanz dazwischen liegt.

2. Controller zum Steuern einer Vorrichtung nach Anspruch 1, welcher Controller ein Objektmanipulationsmittel (7, 50, 52, 1T) zum Manipulieren und Anzeigen des Objektes an der Anzeigeeinrichtung (3) umfaßt,
ein Ausgabemittel (51) zum Ausgeben von Berührungsfeldinformationen (3R), die eine Position eines Berührungskontaktes darstellen;
bei dem das Objektmanipulationsmittel umfaßt:
ein Objektspeichermittel (7) zum Speichern wenigstens einer Datendatei, die Objektdaten zum Anzeigen des Objektes speichert;
ein Anzeigeinformationsspeichermittel (1T) zum Speichern von Anzeigepositionsinformationen, welche die Position spezifizieren, wo das Objekt an der Anzeigeeinrichtung (3) angezeigt wird; und
ein Anzeigesteuermittel (52) zum Erkennen des Manipulationstyps des Objektes gemäß den Berührungsfeldinforrnationen, die solch eine Bewegung angeben, daß zwei Berührungskontakte gegenüberliegende Seiten des Objektes berühren, bewegen, während sie die gegenüberliegenden Seiten des Objektes weiterhin berühren, und stoppen, wobei eine Distanz dazwischen liegt, und zum Steuern, um das Objekt an der Anzeigeeinrichtung (3) so anzuzeigen, daß sich das Objekt an der Anzeigeeinrichtung von da aus, wo die zwei Berührungskontakte die gegenüberliegenden Seiten des Objektes berühren, nach da bewegt, wo die zwei Berührungskontakte stoppen, wobei eine Distanz dazwischen liegt.

3. Vorrichtung nach Anspruch 1 oder Controller nach Anspruch 2, wobei
das Anzeigesteuermittel (52) betriebsfähig ist, um die Bewegung als Aufnahmemanipulation zu erkennen und eine Steuerung auszuführen, um das Objekt an der Anzeigeeinrichtung (3) so anzuzeigen, daß sich das Objekt an der Anzeigeeinrichtung von da aus, wo die zwei Berührungskontakte die gegenüberliegenden Seiten des Objektes berühren, nach da bewegt, wo die zwei Berührungskontakte stoppen, wobei eine Distanz dazwischen liegt.

4. Vorrichtung zur Verwendung mit einer Anzeigeeinrichtung (3), um ein Objekt zu manipulieren, das an der Anzeigeeinrichtung angezeigt wird, welche Vorrichtung ein Objektmanipulationsmittel (7, 50, 51, 52, 1T) zum Manipulieren und Anzeigen des Objektes der Anzeigeeinrichtung (3) umfaßt;
ein Berührungsfeld (11), das an die Anzeigeeinrichtung (3) montiert ist und eine Anzeigeoberfläche der Anzeigeeinrichtung darstellt, die gegenüber Charakteristiken eines Berührungskontaktes auf dem Berührungsfeld empfindlich ist, welche Charakteristiken wenigstens Koordinatenpositionen des Berührungskontaktes enthalten, zum Ausgeben von entsprechenden Berührungsfeldinformationen, welche die Charakteristiken des Berührungskontaktes auf dem Berührungsfeld (11) darstellen;
bei der das Objektmanipulationsmittel umfaßt:
ein Objektspeichermittel (7) zum Speichern wenigstens einer Datendatei, die Objektdaten zum Anzeigen des Objektes speichert;
ein Anzeigeirformationsspeichermittel (1T) zum Speichern von Anzeigepositionsinformationen, welche die Position spezifizieren, wo das Objekt an der Anzeigeeinrichtung (3) angezeigt wird; und
ein Anzeigesteuermittel (52) zum Erkennen des Manipulationstyps des Objektes gemäß den Berührungs feldinformationen und zum Ausführen einer Aufnahmemanipulation des Objektes als Reaktion auf Berührungsfeldinformationen, die angeben, daß sich zwei Berührungskontakte gegenüberliegenden Seiten des Objektes genähert haben und diese berührt haben, wodurch das Objekt einhergehend mit der Bewegung der zwei Berührungskontakte bewegt wird, während sie die gegenüberliegenden Seiten des Objektes weiterhin berühren, und das Objekt freigegeben wird, wenn die zwei Berührungskontakte die gegenüberliegenden Seiten des Objektes nicht mehr berühren und sich hinwegbewegt haben.

## Revendications

1. Appareil pour une utilisation avec un dispositif d'affichage (3) afin de manipuler un objet affiché sur le dispositif d'affichage, l'appareil comprenant :
un moyen de manipulation d'objet (7, 50, 51, 52, 1T) pour manipuler et afficher l'objet sur le dispositif d'affichage (3) ;
un panneau ou écran tactile (11), monté sur le dispositif d'affichage (3) et représentant une surface d'affichage du dispositif d'affichage, qui est sensible à des caractéristiques d'un contact par effleurement sur l'écran tactile, les caractéristiques incluant au moins des positions de coordonnées du contact par effleurement, pour émettre en sortie une information d'écran tactile correspondante représentant les caractéristiques du contact par effleurement sur l'écran tactile (11),
dans lequel ledit moyen de manipulation d'objet comprend :
un moyen de stockage d'objet (7) pour stocker au moins un fichier de données qui stocke des données d'objet pour afficher l'objet ;
un moyen de stockage d'information d'affichage (1T) pour stocker une information de position d'affichage qui spécifie la position au niveau de laquelle l'objet est affiché sur le dispositif d'affichage (3) ; et
un moyen de commande d'affichage (52) pour reconnaître le type de manipulation de l'objet conformément à l'information d'écran tactile indiquant un déplacement de telle sorte que deux contacts par effleurement touchent des côtés opposés de l'objet, se déplacent tandis qu'ils restent en contact par effleurement avec les côtés opposés de l'objet et s'arrêtent moyennant une distance entre, et pour commander l'affichage de l'objet sur le dispositif d'affichage (3) de telle sorte que l'objet se déplace sur le dispositif d'affichage depuis l'endroit où les deux contacts par effleurement touchent les côtés opposés de l'objet jusqu'à l'endroit où les deux contacts par effleurement s'arrêtent moyennant une distance entre.

2. Contrôleur pour commander un appareil selon la revendication 1, le contrôleur comprenant un moyen de manipulation d'objet (7, 50, 52, 1T) pour manipuler et afficher l'objet sur le dispositif d'affichage (3) ;
un moyen d'émission en sortie (51) pour émettre en sortie une information d'écran tactile (3R) qui représente une position d'un contact par effleurement,
dans lequel ledit moyen de manipulation d'objet comprend :
un moyen de stockage d'objet (7) pour stocker au moins un fichier de données qui stocke des données d'objet pour afficher l'objet ;
un moyen de stockage d'information d'affichage (1T) pour stocker une information de position d'affichage qui spécifie la position au niveau de laquelle l'objet est affiché sur le dispositif d'affichage (3) ; et
un moyen de commande d'affichage (52) pour reconnaître le type de manipulation de l'objet conformément à l'information d'écran tactile indiquant un déplacement de telle sorte que deux contacts par effleurement touchent des côtés opposés de l'objet, se déplacent tandis qu'ils restent en contact par effleurement avec les côtés opposés de l'objet et s'arrêtent moyennant une distance entre, et pour commander l'affichage de l'objet sur le dispositif d'affichage (3) de telle sorte que l'objet se déplace sur le dispositif d'affichage depuis l'endroit où les deux contacts par effleurement touchent les côtés opposés de l'objet jusqu'à l'endroit où les deux contacts par effleurement s'arrêtent moyennant une distance entre.

3. Appareil selon la revendication 1 ou contrôleur selon la revendication 2, dans lequel :
ledit moyen de commande d'affichage (52) peut fonctionner pour reconnaître le déplacement en tant que manipulation de saisie et pour réaliser une commandé de manière à afficher l'objet sur le dispositif d'affichage (3) de telle sorte que l'objet se déplace sur le dispositif d'affichage depuis l'endroit où les deux contacts par effleurement touchent les côtés opposés de l'objet jusqu'à l'endroit où les deux contacts par effleurement s'arrêtent moyennant une distance entre.

4. Appareil pour une utilisation avec un dispositif d'affichage (3) afin de manipuler un objet qui est affiché sur le dispositif d'affichage, l'appareil comprenant
un moyen de manipulation d'objet (7, 50, 51, 52, 1T) pour manipuler et afficher l'objet du dispositif d'affichage (3) ;
un écran tactile (11) monté sur le dispositif d'affichage (3) et représentant une surface d'affichage du dispositif d'affichage, qui est sensible à des caractéristiques d'un contact par effleurement sur l'écran tactile, les caractéristiques incluant au moins des positions de coordonnées du contact par effleurement, pour émettre en sortie une information d'écran tactile correspondante représentant les caractéristiques du contact par effleurement sur l'écran tactile (11),
dans lequel ledit moyen de manipulation d'objet comprend :
un moyen de stockage d'objet (7) pour stocker au moins un fichier de données qui stocke des données d'objet pour afficher l'objet ;
un moyen de stockage d'information d'affichage (1T) pour stocker une information de position d'affichage qui spécifie la position au niveau de laquelle l'objet est affiché sur le dispositif d'affichage (3) ; et
un moyen de commande d'affichage (52) pour reconnaître le type de manipulation de l'objet conformément à l'information d'écran tactile et pour réaliser une manipulation de saisie de l'objet en réponse à une information d'écran tactile indiquant que deux contacts par effleurement se sont rapprochés et ont touché des côtés opposés de l'objet et ainsi, l'objet est déplacé en association avec un déplacement des deux contacts par effleurement tandis que ces deux contacts par effleurement continuent à toucher les côtés opposés de l'objet, et l'objet est libéré lorsque les deux contacts par effleurement ne sont plus en train de toucher les côtés opposés de l'objet et se sont séparés.
